(19) **Europäisches Patentamt**

**European Patent Office**

**Office européen des brevets**

(11) **EP 0 983 787 B1**

(12) **EUROPEAN PATENT SPECIFICATION**

(45) Date of publication and mention of the grant of the patent:
**07.04.2004 Bulletin 2004/15**

(51) Int Cl.7: **B01D 53/94**

(21) Application number: **99117205.7**

(22) Date of filing: **01.09.1999**

(54) **Exhaust gas purifying catalyst**

Katalysator zur Reinigung von Abgasen

Catalyseur pour la purification des gaz d'échappement

(84) Designated Contracting States:
**DE FR GB**

(30) Priority: **02.09.1998 JP 24811798**
**27.10.1998 JP 30483998**

(43) Date of publication of application:
**08.03.2000 Bulletin 2000/10**

(73) Proprietor: **NISSAN MOTOR CO., LTD.**
**Yokohama-shi Kanagawa-ken (JP)**

(72) Inventors:
• **Akama, Hiroshi**
**Zushi-shi, Kanagawa-ken (JP)**
• **Itou, Junji**
**Yokohama-shi Kanagawa-ken (JP)**
• **Kamikubo, Maki**
**Yokosuka-shi, Kanagawa-ken (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 855 210**      **US-A- 5 744 103**

• **DATABASE WPI Section Ch, Week 198927 Derwent Publications Ltd., London, GB; Class E36, AN 1989-197063 XP002175745 & JP 01 135542 A (TOYOTA CENT RES & DEV LAB), 29 May 1989 (1989-05-29)**
• **DATABASE WPI Section Ch, Week 199210 Derwent Publications Ltd., London, GB; Class E36, AN 1992-075692 XP002175744 & JP 04 018915 A (MITSUBISHI MOTOR CORP), 23 January 1992 (1992-01-23)**

**Description**

1. Field of the Invention

The present invention relates to a catalyst for reducing a hydrocarbon (HC), a carbon monoxide (CO) and a nitrogen oxide (NOx) in an exhaust gas discharged, for example, from an internal combustion engine of an automobile (gasoline, diesel), a combustion chamber of a boiler, or the like. Particularly, the invention relates to an exhaust gas purifying catalyst which is capable of reducing the nitrogen oxide contained in the exhaust gas discharged from a lean-burn (fuel combustion at lean air-fuel rations) engine or the like under an excessive oxygen atmosphere of a high oxygen content.

2. Description of Relevant Art

As the catalyst for purifying an exhaust gas containing generally equal amounts of oxide components and deoxide (reducing) components, such as an exhaust gas from the conventional automotive engine, a three way catalyst has been used in this art widely. This three way catalyst is identical to a catalyst whose main ingredient is an active alumina carrying various kinds of components. Note, these components come from noble metal components, such as platinum (Pt), palladium (Pd), rhodium (Rh), or the like and further ceria (Ce) component. In this way, the three way catalyze is capable of reducing the hydrocarbon (HC), the carbon monoxide (CO) and the nitrogen oxide (NOx) with high efficiency.

In recent years, from points of improving the fuel consumption of a vehicle and also reducing the amount of a carbon dioxide discharged from the engine, there has been widely used a lean-burn engine which can run at even an air fuel ratio larger than a theoretical air fuel ratio. An exhaust gas discharged from this lean-burn engine, which will be referred to "lean exhaust gas" hereinafter, has a high oxygen content in comparison with the exhaust gas from the conventional engine running at the theoretical air fuel ratio and its vicinity. The latter exhaust gas will be referred to " stoichiometric exhaust gas" hereinafter. Against such a lean exhaust gas, the above-mentioned three way catalyst cannot reduce NOx (nitrogen oxide) sufficiently. Under this situation, they are looking forward to a new catalyst capable of reducing NOx in the lean exhaust gas with high efficiency and therefore, there have been carried out many attempts for developing various kinds of NOx reduction catalysts.

Corresponding to the requirements as above, there is proposed a zeolite type catalyst which includes a variety of metal components carried by a zeolite, such as a Y-type zeolite, a L-type zeolite, a mordenite, a MFI zeolite, or the like. It is also known that the zeolite type catalyst has a capacity to effectively reduce NOx in the lean exhaust gas on condition of the presence of HC.

It is also recognized that transition metal components, such as copper (Cu), cobalt (Co), silver (Ag), nickel (Ni), iron (Fe), etc., as well as platinum (Pt) as noble metal components, are available as the metal components being carried by zeolite. Among these components, the Cu-zeolite type catalyst having copper carried exhibits a relatively superior capacity to reduce NOx in spite of gaseous condition of high flowing velocity. Accordingly, there is some expectations that the Cu-zeolite type catalyst should be applied on a purification of the exhaust gas discharged from a source of a compact transferring generator like an automobile, a fixed type engine for a private power plant and so on. (United States Patent No. 4297328 etc.)

SUMMARY OF THE INVENTION

However, the zeolite type catalyst having the above metal components carried on zeolite has not made for practical use as an automotive exhaust gas purifying catalyst, due to the following problems.

First, since the zeolite type catalyst has a narrow temperature range for allowing NOx to be reduced effectively, the NOx reducing capacity of the catalyst is not sufficiently effected in a relatively low temperature range, especially within the range from 150 to 300°C. Further, when the exhaust gas contains a relatively small amount of hydrocarbon (HC), especially, under condition that a HC/NOx ratio is more than 5 and less than 6, the NOx reducing capacity of the catalyst does deteriorate rapidly. Additionally, there is a fundamental problem that a deterioration in the catalyst is remarkably great under a moisture condition of high-temperature more than 600°C. (i.e. water-heat condition)

On the contrary, regarding an improvement of NOx reducing capacity in the above-mentioned low-temperature range, there has been already proposed to provide a noble metal catalytic layer beneath a Cu-zeolite type catalytic layer of the catalyst thereby to allow the upper Cu-zeolite type catalyst to operate from low temperature by making use of reaction heat produced at the noble metal catalytic layer. (Japanese Patent Publication Nos. 1-127044 and 5-68888) In this case, however, it is worried to cause the NOx reduction purification rate to be reduced since the deterioration is progressed due to the oxidization heat at the noble metal catalytic layer and furthermore, HC family elements are oxidized for prior consumption due to the intense oxidizing activity of the noble metal catalytic layer.

Note, it is expected that this influence is particularly enhanced in case that the Cu-zeolite type catalytic layer exists together with the noble metal components (Japanese Patent Publications Nos. 1-31074 and 5-168939).

Although a Pt-type catalyst is capable of converting NOx at even a relatively low temperature of 200 to 250°C, the conversion from NOx to $N_2$ is also accompanied with the conversion to $N_2O$ disadvantageously. Additionally, the Pt-type catalyst has a problem of difficulty to attain a high NOx reducing rate in the temperature range more than 300°C since the active temperature range of the catalyst is relatively narrow.

In this way, under the exhaust gas of low ratios HC/NOx, either of the Cu-zeolite type catalyst and the Pt-type catalyst exhibits insufficient NOx reduction capability.

Therefore, there has been also proposed a reducing method of secondarily supplying HC, alcohol, their families, or the like as a reducing agent into a catalyst inlet. In connection, there are also proposed a method of mounting a tank filled up with the reducing agent on a vehicle and another method of utilizing a portion of fuel as the reducing agent. However, the former method has problems of requiring a position to mount the tank and increasing a weight of the vehicle itself, while the latter has a problem of deteriorating the fuel consumption of the vehicle.

Additionally, the above-mentioned conventional catalysts have a problem of deteriorating the purification performance of the catalyst remarkably since moisture in the exhaust gas interferes the catalyst's reaction to reduce NOx or the structural change in the catalyst is caused by its fever.

Taking such problems into consideration, a catalyst having a transition metal and its base metal immersed in the zeolite is disclosed in Japanese Patent Publication No. 6-198188.

In even this catalyst, however, there still remains an insufficiency in terms of the NOx reduction performance under the lean atmosphere, especially the catalyst's performance against the durability.

As mentioned above, there is a problem to be solved that the relevant art does not still establish a technique to effectively purifying the lean exhaust gas without causing any problem.

It is therefore an object of the present invention to provide an exhaust gas purifying catalyst which is capable of reducing NOx with high efficiency under even an exhaust condition of a low HC/NOx ratio.

It is another object of the invention to provide an exhaust gas purifying catalyst which is capable of improving such a NOx reducing capability under lean atmosphere that the conventional catalyst could not exhibit its activity sufficiently.

As a result of repeating the investigation in order to solve the above problems, while paying an attention to the size of HC families in the exhaust gas, we, the inventors of the present invention, found a fact that the above problems are solved by employing specified inorganic compounds of which pore diameter are different from each other and of which active temperature ranges to reduce NOx are together low and finally completed the present invention.

To achieve the above-mentioned objects of the present invention, there is provided an exhaust gas purifying catalyst which comprises a first catalytic material which contains a first refractory inorganic compound having pores of equal to or less than 1 nm in size and has a first activation temperature to reduce a NOx emission of the engine, and a second catalytic material which contains a second refractory inorganic compound having pores of equal to or more than 2 nm in size and has a second activation temperature to reduce the NOx emission. The first and second activation temperature are within a range of 30 °C relative to each other.

The above and other features and advantages of this invention will become apparent, and the invention itself will best be understood, from a study of the following description and appended claims, with reference to the attached drawings showing one preferred embodiment of the invention.

- BRIEF DESCRIPTION OF THE ACCOMPANYING DRAWINGS

Fig. 1 is a diagram showing respective layer structures of examples A and comparative examples A and their NOx reduction ratios at 420°C in catalyst inlet temperature;

Fig. 2 is a graphic diagram showing respective light-off characteristics of the catalysts in connection with the examples A and the comparative examples A;

Fig. 3 is a diagram showing respective compositions of the catalysts in accordance with examples B and comparative examples B; and

Fig. 4 is a diagram showing respective results of estimated catalytic activity of the catalysts in accordance with the examples B and the comparative examples B.

DETAILED DESCRIPTION OF THE PREFERRED EMBODIMENTS

The exhaust gas purifying catalyst of the present invention will be described in detail, hereinafter.

First Embodiment

(1) This exhaust gas purifying catalyst is constructed by applying a catalytic layer on a honeycomb-shaped monolith carrier, for example.

Note, the honeycomb-shaped monolith carrier is suitable for forming a multi-layered catalytic layer and therefore, various catalytic components in connection with the present invention are applied on the honeycomb-shaped carrier thereby to form the catalytic layer.

Although a cordierite type carrier is widely employed as the above honeycomb-shaped carrier, it is not limited to the cordierite type carrier and therefore, for example, a honeycomb carrier made of metallic materials is also applicable to the honeycomb-shaped carrier.

Note, when the whole configuration of the catalyst is shaped to have a honeycomb structure by using the honeycomb-shaped carrier, then it is possible to increase contact area between the catalyst and the exhaust gas, so that the pressure loss can be reduced. Thus, in case of an automotive catalyst which vibrates in use and is required to process a large quantity of exhaust gas in a limited space, it is remarkably advantageous to form the honeycomb-shaped catalyst.

Further, it is preferable to establish the honeycomb-shaped monolith type exhaust has purifying catalyst of the invention in an exhaust system of an internal combustion engine operated under the lean condition exceeding the air fuel ratio of 14.7. In detail, the catalyst of the invention is capable of accomplishing its high NOx reducing capacity against the exhaust gas of an diesel engine where there are frequently produced such conditions that the oxygen concentration is more than 5 % and a ratio (HC/ NOx) of a quantity of HC required to convert NOx to $N_2$ by the reaction between NOx and HC, to a quantity of NOx, is less than 10, especially 5 to 6.

(2) In the exhaust gas purifying catalyst apparatus of the present invention, the above-mentioned catalytic layer comprises a first catalytic material containing a refractory inorganic compound having pores of equal to or less than 1 nm in size or diameter and a second catalytic material containing another refractory inorganic compound having pores of equal to or more than 2 nm in size or diameter.

In this way, it is essential for the present invention to use two kinds of catalytic materials in the form of their combination. Therefore, upon constructing the catalytic layer in the form of a single layer, the catalytic layer may carry the mixed first and second catalytic materials. Alternatively, upon forming a catalytic layer containing the first catalytic material as an inside layer, the layer may be covered with another catalytic layer containing the second catalytic material as the outside layer.

Now, we can show various kinds of zeolite materials as the refractory inorganic compound having pores of less than 1 nm in size or diameter and also show a catalyst containing zeolite carrying Cu, as a typical example of the first catalytic material.

Hereat, as the zeolite carrier for the Cu-zeolite catalyst, a MFI zeolite is preferable in particular. Such a Cu-MFI zeolite is capable of utilizing the olefin hydrocarbon (HC) family of four carbon (C4) and under, of which molecular weight is relatively small, in the reducing reaction of NOxeffectively. Furthermore, the Cu-MFI zeolite is superior to its activity at low temperature in comparison with the metal catalyst carrying zeolite.

Preferably, an amount of copper (Cu) carried by the catalyst containing Cu-MFI zeolite is set to 2 to 6 wt% as Cu with respect to the MFI zeolite removing absorbed water. When the amount is less than 2 wt%, it is difficult to provide the catalyst with its sufficient activity. On the other hand, in case of exceeding 6 wt%, then the catalyst is easy to have pore-blocking, so that it may be difficult to ensure the sufficient durability.

Moreover, as the MFI zeolite, it is preferable that a ratio of silica/alumina ($SiO_2$ / $Al_2O_3$) is within a range of 20 to 50. If the ratio is less than 20, there is produced a possibility to cause an excessive amount of carried Cu.

As a representative example of the refractory inorganic compound having pores of more than 2 nm in size or diameter, the alumina may be recommended, while the catalyst containing the alumina carrying Rh may be recommended as the second catalytic material. It is noted that ,preferably, the refractory inorganic compound has pores of a range between 10 nm and 35 nm in size or diameter.

According to such a Rh-type catalyst, it is possible to effectively make use of even hydrocarbon (HC) family, which is too large to enter the zeolite's pores, in the reducing reaction of NOx. Additionally, since the catalyst exhibits a weak oxidation power, the wasteful oxidization of HC is not progressed that the effective using rate of HC against the reducing reaction of NOx can be maintained highly.

Hereat, as the refractory inorganic compound used for carrying Rh, it is preferable to have a specific surface area of 60 $m^2$/g and more. In this view, an oxide containing components related to an element Al, Si, Ti, Zr, Mg or their combination is appropriate.

As a concrete example of oxide, we can give an example of alumina, silica, titania, zirconia or magnesia. Although these oxides are used individually, two or more kinds of oxides may be selected in proper and used in the form of their mixture. Additionally, it is also possible to use a crystallinity oxide containing aluminum and silicon, such as the zeolite.

Further, it is desirable that the Rh carrying amount in the second catalytic material is more than 0.5 wt%, more preferably, 1.5 wt% with respect to the refractory inorganic compound having the specific surface area more than 60 $m^2/g$.

There is a case that the NOx reducing and purifying reaction exhibits insufficiently in case of less than 0.5 wt% in the carrying amount. Conversely, even if carrying excessively, the improvement in performance could not be attained as it would be expected. Therefore, representatively, it is preferable to carry out the preparation within the range of 0.5 to 4 wt%.

Furthermore, in accordance with the present invention, it is applicable to allow either the catalytic layer containing the first and second catalytic materials or the outside catalytic layer containing the second catalytic materials with Rh to contain tungsten (W). Consequently, it will be possible to provide a high-performance catalyst.

Thus, it is supposed that, owing to the addition of W, the balance of absorption power between HC and NOx in the Rh catalyst itself gets better, so that the NOx reducing ability is progressed more effectively.

In order to perform the adding effect of W sufficiently, it is desirable to employ an oxide having a relatively high specific surface area as the carrier of the Rh-type catalyst. From this point of view, it is possible to use the above-mentioned oxide having the specific surface area more than 60 $m^2/g$ advantageously.

It is noted that, preferably, an using ratio of the first catalytic material containing the MFI zeolite carrying Cu to the second catalytic material containing Rh components is set from 50/50 to 80/20 in weight ratio (wt%)in the exhaust gas purifying catalyst of the invention.

This range of using ratio comes from our empirical knowledge in the combination of Cu-MFI zeolite with Rh-type catalyst. It is supposed that the effective range is concerned with the activities of both catalytic materials although the reason is not necessarily obvious. That is, since the former Cu-MFI zeolite is more active than the latter and a relatively small hydrocarbon (HC) less than four carbon (C4) is much contained in the exhaust gas, the using of a large quantity of Cu-MFI zeolite catalyst is believed to be effective.

It should be noted that when the coating amount of the catalytic layer is too small in the exhaust gas purifying catalyst of the invention, then the capability becomes insufficiently, while the catalyst is disadvantageous in terms of the pressure loss when the coating amount of the catalytic layer is too much.

From such a point of view, it is desirable that the coating amount of the catalytic layer is within the range of 100 to 300 g per liter (1L) in volume of the honeycomb carrier.

(3) According to the exhaust gas purifying catalyst, the above-mentioned first catalytic material is used in combination with the second catalytic material and furthermore, a difference between the first activation temperature of the first catalytic material for reducing NOx and the second activation temperature of the second catalytic material is controlled within a range of 30 °C.

As mentioned before, what is proposed by the present invention is a technical idea related to the combination of two sorts of specified catalytic materials as above and there is a remarkable difference between the present invention and the prior art catalysts, with respect to methods of both selecting two sorts of different catalytic materials and combining them with each other.

In the relevant art, there are many proposals in the combination, for example, the Cu-zeolite catalyst, the Pt-alumina catalyst, the Pd-alumina catalyst, or the like, as mentioned above. However, it will be understood that the typical problems cannot be solved by such combinations. Thus, it is expected that the noble metal catalysts' inherent HC oxidation power causes the NOx reducing capacity to be deteriorated to the contrary. Moreover, the amount of $NO_2$ produced cannot be bypassed.

To begin with, the active temperature range of the Cu-zeolite catalyst is over 300°C, while the active temperature ranges of the Pt-type catalyst and the Pd-type catalyst are less than 300°C, respectively. In this way, although the conventional proposals are directed to the enlargement of applications by combining the catalysts having different active temperature ranges, either of them becomes dominant in its activity actually, so that it is difficult to attain a remarkable improvement in the catalyst's performance, which might be simply expected from the combination.

Therefore, according to the invention, a great deal of attention is attracted to a catalyst group where respective active temperature ranges of the catalysts are substantially equal to each other, making a complete volteface against the conventional concept. Furthermore, in order to improve the catalyst's NOx reducing capability, we are making use of a variety of HC (hydrocarbon) elements contained in the exhaust gas effectively as possible, while paying attention to the effective using rate of HC against the NOx reducing reaction. That is, according to the invention, light HC elements each having a small molecular size or diameter are utilized in the first catalytic material containing small pores, while heavy HC elements each having a large molecular size or diameter are effectively utilized in the second catalytic material containing large pores.

In the present invention, it is required that the first catalytic material is close to the second catalytic material with respect to the active temperature range against the NOx reduction purifying reaction, as possible. According to our experience, a difference in temperature range therebetween is required to be equal to or less than 30°C. If separating in excess of this range, then the combination effect is not obtained since one catalytic material exhibiting a great low-temperature activity is superior in performance to the other catalytic material overwhelmingly.

As mentioned above, we are presenting the combination of the Cu-MFI zeolite catalyst and the Rh-alumina catalyst as one typical example of the combination of the first and second catalytic materials. It should be noted that the difference in first and second activation temperature between these catalytic materials of two sorts is within a range of approximately 20°C, thereby accomplishing a remarkable combination effect.

According to the embodiment, since there are together employed the specified inorganic compounds of which pore size or diameter are different from each other and of which NOx reduction are together low while paying attention to the size of HC families in the exhaust gas, it is possible to provide the exhaust gas purifying catalyst which is capable of reducing NOx with high efficiency under even an exhausting condition of low ratio HC/NOx.

That is, it means that if using the exhaust gas purifying catalyst of the invention, it is possible to purify the exhaust gas with high efficiency under the condition of low ratio HC/NOx. Therefore, it is also possible to provide an automobile with the reduced pollution of the environment and the improved economics (fuel consumption).

Second Embodiment

The exhaust gas purifying catalyst of the embodiment is composed of rhodium, a refractory inorganic compound and tungsten and contains the tungsten of 150 to 500 g per liter of the catalyst, in the form of tungstic oxide.

In the embodiment, it is necessary to establish the tungsten content of 150 to 500 g per liter of the catalyst by the following reason.

It is supposed that, in the NOx reduction, nitrogen oxide (NOx) is reduced up to nitrogen ($N_2$) by the reaction between NOx and a partial oxide of HC and that tungsten partially contributes to the partial oxidation because of its NOx reduction effect. However, it is necessary to increase an amount produced by the partial oxidation since tungsten only oxidizes a part of HC and therefore, it is required to use the tungsten oxide of at least 150 g per liter of the catalyst. While, judging from a fact that there is no advantageous improvement in the catalyst's characteristics even if it contains the tungsten oxide in excess of 500 g/L, we concluded that the catalyst is desirable to contain the tungsten oxide of 150 to 500 g/L.

Further, preferably, the rhodium content contained in the exhaust gas purifying catalyst is (1) 0.001 to 0.02 in molar ratio of Rh to the tungsten content (which will be expressed as Rh/W, hereinafter); and (2) 0.15 to 8.0 g per liter (g/L) of the catalyst volume. Additionally, it is also preferable that the Rh dispersibility is within a range of 0.1~5.0% by in accordance with a dispersibility measuring method recommended by the Catalyst Society.

The reason of the above definition (1) is that when the ratio Rh/W is less than 0.001, the contact amount between rhodium (Rh) and tungsten (W) is small because of an excess of the quantity W, so that the sufficient NOx reducing reaction is not progressed. While, if the ratio Rh/W exceeds 0.02, the excessive Rh causes the partial oxide of HC to change the complete oxide, i.e. $CO_2$, so that the sufficient NOx reduction is not progressed.

Further, even if the ratio Rh/W is within the above range, the contact amount between Rh and W gets small on assumption that the Rh content is less than 0.15 g/L, so that the NOx reduction will not be progressed sufficiently. On the contrary, when the Rh content exceeds 8.0 g/L, rhodium becomes excessive so that HC oxidizing reaction takes priority. Consequently, since the shortage of HC as a reducing agent is caused, the sufficient NOx reduction is not progressed. Preferably; a content of Rh is a range from 0.5 to 4.0 g/L. As a Rh content is more in the range, capability is enchanced. However, if it is over 4.0 g/L, improvement of the capability corresponding with the Rh content is not obtained. That is, the capability reaches the limit.

Preferably, the above refractory inorganic compound involved in the exhaust gas purifying catalyst is identical to at least one kind selected from a group of alumina, silica-alumina, titania-silica, magnesia-alumina, ceria-alumina and zeolite. Particularly, the active alumina is more preferably for the compound. Even after subjecting to an endurance test, such a materiel exhibits a small geometrical change, such as specific surface area, and is suitable for effecting the catalyst's NOx reducing performance under the lean atmosphere. Preferably, Zeolite is identical to at least one kind selected from a group of MFI-type, mordenite-type, Y-type, and β-type.

It is desirable that the using amount of the refractory inorganic compound is within a range of 10 to 300 g/L in view of allowing the diffusion of exhaust gas to take times, thereby enhancing the reaction efficiency.

Further, the specific surface area is preferable to be more than 60 $m^2/g$ since it can execute the slow diffusion of exhaust gas to progress the reaction efficiency.

Furthermore, a rare metal element, an iron type transition metal; an alkaline earth metal, or the like may be added to the refractory inorganic compound for purposes of raising its heat-resistant specific surface area.

To contain the refractory inorganic compound in the catalyst roughs the contact between rhodium and tungsten, so that the growth of grain is restricted thereby to improve the heat-resistance of the catalyst. Consequently, it is possible to restrict the deterioration of catalyst, whereby the NOx reducing capability under the lean atmosphere can be enhanced after the endurance test.

The ratio of tungsten as the tungstic oxide to the refractory inorganic compound is preferable to be 1 : 0.02 to 0.4 in weight. When the ratio is less than 1 : 0.02, the heat resistance of the catalyst is so deteriorated that the desirable reduction performance cannot be obtained. Additionally, even if adding the refractory inorganic compound in excess of the ratio of 1 0.4, a remarkable increasing effect cannot be attained.

The coating amount within a range of 250 to 550 g/L is. applied to a honeycomb carrier of the catalyst composed of the refractory inorganic oxide and tungsten. Since the production of partial oxide of HC generally requires a sufficient contact time, the contact time of exhaust gas is so short that a sufficient NOx reduction does not proceed in case of the coating amount less than 250 g/L. Conversely, even when the coating amount exceeds 500 g/L, there is not produced a meaningful improvement in characteristics of the catalyst. Under such a situation, it is preferable that the coating amount per liter of the catalyst is within the range of 250 to 550 g/L.

Additionally, it is desirable that an amount of the catalytic material applied on the honeycomb carrier and composed of rhodium, the refractory inorganic oxide and tungsten is within a range of 350 to 550 g/L.

As to the preparation of the exhaust gas purifying catalyst of the invention, the rhodium compound for the catalyst is provided by the combination among a nitrate, a carbonate, an ammonium salt, an acetate, a halogenide, an oxide, etc., and the using of a water-soluble salt is particularly preferable in view of the improvement of the catalytic performance. With no limitation to a specific method, there can be adopted a variety of known preparation methods, such as an evaporation and coagulating method, a sedimentation method, an immersing method or the like, unless it accompanies with the remarkable deviation of components.

For example, the exhaust gas purifying catalyst may be prepared by firstly immersing a water-soluble or dispersing liquid of catalytic materials containing the component of rhodium in a mixture of refractory inorganic oxide and tungstic oxide, secondly removing the water for dry and finally heat-treating the residue at high temperature more than 800°C in the air and/or air-flow. That is, it is preferable to allow rhodium to permeate into the mixture of refractory inorganic oxide and tungstic oxide and remove moisture from the mixture for drying and sequentially bake the dried mixture at a temperature more than 800°C. The high-temperature baking over 800°C allows the mutual effect between the element Rh and the refractory inorganic oxide to be strengthened thereby to restrict Rh's oxidizing ability for HC. Consequently, the coexisting W's partial oxidizing ability for HC becomes dominant to make it easy to progress the NOx reduction.

Next, it is executed to crush the tungstic oxide and the refractory inorganic oxide carrying rhodium into a slurry and sequentially coat it on the catalyst carrier for baking at temperature of 400 to 900°C, thereby completing the exhaust gas purifying catalyst of the invention.

As the catalyst carrier of the invention, it may be selected from known catalyst carriers, for example, a honeycomb carrier having a monolith structure of a refractory material, a metallic carrier and so on.

Preferably, the configuration of the catalyst, though it is not limited to the following one particularly, is in the form of a honeycomb body. Although the cordierite material, such as ceramics, is widely employed as the honeycomb material, it may be made of metallic material, such as ferrite kinds of stainless steels, in the modification. Alternatively, the catalytic powder per se may be molded into a honeycomb configuration. Owing to the formation of such a honeycomb-shaped catalyst, the contact area between the catalyst and the exhaust gas is so increased as to restrict the pressure loss and therefore, it would be advantageous to employ the catalyst for the automobile or like.

As mentioned above, according to the embodiment of the invention, it is possible to improve the NOx reducing capability under the lean atmosphere thart the conventional catalyst could not exhibit its activity sufficiently.

Furthermore, according to the present method of manufacturing the catalyst, it is possible to complete the exhaust gas purifying catalyst capable of performing the NOx reducing operation under the lean atmosphere more effectively.

The examples and comparative examples will be described in detail, hereinafter. It is noted that examples A corresponds to first embodiment and examples B corresponds to second embodiment.

(Example A1)

(1) Preparation of 1st. Catalyst

At first, a solution of pH 9.5 was obtained by adding ammonia water to a copper nitrate solution of concentration of 0.2 M (mol/l). Next, $NH_4$-type MFI zeolite powder having the ratio $SiO_2$ / $Al_2O_3$ of approximately 40 was added into the solution stirringly and filtered to separate a solid from liquid subsequently. By repeating the above stirring and filtering operations three times, a MFI zeolite catalytic cake carrying an ion exchange Cu was completed. Then, in the drying unit, the cake is dried at . 120 °C for 24 hours or more and successively baked in an electric furnace at 600°C for 4 hours atmospherically, so that a Cu-MFI zeolite catalytic power having 3.8·wt% of Cu carried (CATA. 1) was obtained.

As the result of measuring the pore distribution, it was found that the so-obtained catalyst has a bi-modal distribution having peaks of approximately 0.55 nm and 1.5 nm in pore size or diameter.

Next, the Cu-MFI zeolite catalytic power was mixed with an alumina sol and water and crushed in a magnetic bowl mill pot for 20 min. into a slurry. The additive amount of alumina sol was set to 8 wt% as $Al_2O_3$ for the mixed powder of Cu-MFI zeolite catalytic power. Then, it was carried out to coat the cordierite honeycomb carrier 2.7L having about 400 flow paths with the so-obtained slurry. Next, the carrier was dried at 150 °C with hot air and successively baked at 500 °C for one hour, thereby completing a honeycomb catalytic body 1A having the mixed powder coating amounts of 150 g/L.

(2) Preparation of 2nd. Catalyst

Upon preparing active $Al_2O_3$ powder of specific surface area of approximately 280 $m^2$/g, it was executed to immerse the active $Al_2O_3$ powder to meta-tungstic acid ammonium solution. Thereafter, the solution was dried at 120 °C for 24 hours and successively baked at 650°C for 4 hours, so that a $W/Al_2O_3$ powder having W contents of 10 wt% was obtained. Next, the $W/Al_2O_3$ powder was immersed in a nitrate acid Rh solution to allow Rh to be carried by the immersing method. Next, the solution was dried at 120 °C for 24 hours and successively baked at 650°C for 4 hours, so that a $Rh-W/Al_2O_3$ powder with the carried Rh of 1.8 wt% (CATA.2) was obtained.
It was also found that the pore distribution of the second catalyst was a simple distribution having a broad peak of approximately 20 nm in pore size or diameter.
Together with water and nitrate acid alumina sol, the so-obtained $Rh-W/Al_2O_3$ catalytic powder was mixed and crushed in the magnetic bowl mill pot for 20 min. into a slurry. The additive amount of nitrate acid alumina sol was set to 2 wt%. Then, the slurry is applied on the above honeycomb catalytic body 1A and successively dried at 150 °C with hot air. Thereafter, the body 1A was baked at 500 °C for one hour, thereby completing a honeycomb catalyst A1 having the second catalyst of its coating amounts of 100 g/L.

(Example A2)

A honeycomb catalyst A2 of this example was completed by repeating operations similar to those of the example A1, except to set the coating amounts of the first catalyst and the second catalyst of approximately 200 g/L and 50 g/L, respectively.

(Example A3)

A honeycomb catalyst A3 of this example was completed by repeating operations similar to those of the example A1, except to set the coating amounts of the first catalyst and the second catalyst of approximately 125 g/L, respectively.

(Example A4)

A honeycomb catalyst A4 of this example was completed by repeating operations similar to those of the example A1, except to set the coating amounts of the first catalyst and the second catalyst of approximately100 g/L and 150 g/L, respectively.

(Example A5)

A honeycomb catalyst A5 of this example was completed by repeating operations similar to those of the example A1, except to set the coating amounts of the first catalyst and the second catalyst of approximately 225 g/L and 25 g/L, respectively.

(Example A6)

A honeycomb catalyst A6 of this example was completed by repeating operations similar to those of the example A1, except using $ZrO_2$ - $Al_2O_3$ powder of specific surface area of approximately 190 $m^2$/g in the preparation process of the second catalyst, in place of active $Al_2O_3$ powder of specific surface area of approximately 280 $m^2$/g.
Note, the pore distribution of the second catalyst in the honeycomb catalyst was a simple distribution having a broad peak of approximately 30 nm in pore size or diameter.

(Example A7)

A honeycomb catalyst A7 of this example was completed by repeating operations similar to those of the example A1, except using $SiO_2$ - $Al_2O_3$ powder of specific surface area of approximately 220 $m^2$/g in the preparation process of the second catalyst, in place of the active $Al_2O_3$ powder of specific surface area of approximately 280 $m^2$/g.

Note, the pore distribution of the second catalyst was a simple distribution having a broad peak of approximately 25 nm in pore size or diameter.

(Example A8)

A honeycomb catalyst A8 of this example was completed by repeating operations similar to those of the example A1, except using the $SiO_2$ - $Al_2O_3$ powder of specific surface area of approximately 190 $m^2$/g in the preparation process of the second catalyst, in place of the active $Al_2O_3$ powder of specific surface area of approximately 280 $m^2$/g.

Note, the pore distribution of the second catalyst was a simple distribution having a broad peak of approximately 30 nm in pore size or diameter.

(Example A9)

A honeycomb catalyst A9 of this example was completed by repeating operations similar to those of the example A1, except using MgO - $Al_2O_3$ powder of specific surface area of approximately 230 $m^2$/g in the preparation process of the second catalyst, in place of the active $Al_2O_3$ powder of specific surface area of approximately 280 $m^2$/g.

Note, the pore distribution of the second catalyst was a simple distribution having a broad peak of approximately 25 nm in pore size or diameter.

(Example A10)

While using $ZrO_2$ powder of specific surface area of approximately 65 $m^2$/g in place of the active $Al_2O_3$ powder of specific surface area of approximately 280 $m^2$/g in the preparation process of the second catalyst, a Cu-$ZrO_2$ catalyst carrying Cu of 5.5 wt% was obtained by the above-mentioned process in accordance with an immersing method using copper nitrate solution. Except the above-mentioned matters, a honeycomb catalyst A10 of this example was completed by repeating operations similar to those of the example A1.

Note, the pore distribution of the second catalyst was a simple distribution having a broad peak of approximately 35 nm in pore size or diameter.

(Example A11)

It was carried out to mix the first catalytic slurry and the second catalytic slurry in the above example A1 at a 6:4 ratio and further coating a cordierite honeycomb carrier 2.7L having about 400 flow paths with the resultant mixed slurry. Next, the carrier was dried at 150°C with hot air and successively baked at 500 °C for one hour, thereby completing a honeycomb catalyst A11 having the mixed powder coating amounts of 250 g/L.

(Example A12)

A honeycomb catalyst A12 of this example was completed by repeating operations similar to those of the example A1, except baking at 720 °C for 4 hours, in place of baking at 650 °C for 4 hours. As a result of measuring the pore of the second catalyst, it was found that the pore distribution of the second catalyst was a simple distribution having a broad peak of approximately 40 nm in pore size or diameter. A difference between an active temperature of the first catalyst and the second catalyst was 30 °C. It is because the baking temperature was 720 °C and the active temperature of the second catalyst was shifted to a high temperature side by 10 °C.

(Comparative Example A1)

Using the first catalyst of the example A1, it was executed to increase the coating amounts from 150 g/L to 250 g/L in the manufacturing process of the honeycomb catalytic body 1A without applying the second catalyst, thereby completing a honeycomb catalyst Ref. A1 of this example.

(Comparative Example A2)

Without applying the first catalyst in the example A1, it was carried out to coat the cordierite honeycomb carrier 2.7L having about 400 flow paths with the second catalytic slurry, thereby completing a honeycomb catalyst Ref. A2 having the mixed powder coating amounts of 250 g/L.

(Comparative Example A3)

It was carried out to reverse the coating order of the first catalyst and the second catalyst in the example A1, thereby completing a honeycomb catalyst Ref. A3 having an inside layer of the second catalyst and the outside layer of the first catalyst.

(Comparative Example A4)

Upon preparing active alumina powder of specific surface area of approximately 280 $m^2$/g, it was executed to add the active $Al_2O_3$ powder to dinitrodiammine Pt solution having Pt concentration of approximately 4 wt% and stir the mixture well. Thereafter, the solution was dried at 120 °C for 24 hours or more and successively baked at 500°C for 4 hours, so that Pt-$Al_2O_3$ powder having 1.2 wt% of Pt carried was obtained. Next, the Pt-$Al_2O_3$ powder was mixed with a nitrate acid alumina sol and water and crushed in the magnetic bowl mill pot for 30 min. into a slurry. The additive amount of nitrate acid alumina sol was set to 2 wt% for the Pt-$Al_2O_3$ powder.

Then, it was carried out to coat the cordierite honeycomb carrier 2.7L having about 400 flow paths with the so-obtained slurry. Next, the carrier was dried at 150 °C with hot air and successively baked at 500 °C for one hour, thereby completing a honeycomb catalyst Ref. A4 having the mixed powder coating amounts of 250 g/L.

Note, the pore distribution of the second catalyst was a simple distribution having a broad peak of approximately 20 nm in pore size or diameter.

(Comparative Example A5)

A honeycomb catalyst Ref. A5 of this example was completed by providing a coating layer of the second catalyst as similar to the example A1, except to set the Pt-$Al_2O_3$ coating amounts of 150 g/L in the comparative example A4.

[Pore Size Measuring Method]

Pore distribution measuring was carried out by the apparatus made by Shimazu Co. Ltd. (ASAP2100). First, a catalyst sample was deaerated by 10 μ mHg at a temperature of 300 °C. With respect to pores of equal to or more than 10 nm in size or diameter, relative pressure was changed by constant-volume method, and an adsorption amount of nitrogen was measured at temperatures of liquid nitrogen, thereby analyzing a pore distribution by BJH (Barrett, Joyner and Halenda) method. With respect to pores of less than 10 nm in size or diameter, similarly, an adsorption amount of argon was measured at temperatures of liquid argon, thereby analyzing a pore size or diameter distribution by HK ( Harvath and Kawazoe) method (See Shimazu Hyouron 48th, NO.1 (1991) Page.35 to 49).

[Example of Catalyst Performance Test]

(1) Catalyst Performance Estimation Test by Engine Dynamo Apparatus

The catalysts of the above examples and comparative examples were built into an exhaust system of an engine dynamo apparatus having a built-in "direct-injection" type diesel engine of 4-cylinder and 2.5 liter, and measured with respect to their reducing capability of NOx in the exhaust gas, one after another. Note, in the exhaust system of the engine dynamo apparatus, a fuel injection nozzle is provided in order to control the ratio HC/ NOx in the exhaust gas at the inlet of the catalyst.

As to the measurement of NOx reduction efficiency, the temperature at the catalyst inlet was raised from 130 to 450°C at a heating rate of 100 °C /min., while the NOx reduction purification rate (light-off characteristics) was measured with respect to temperature of the catalyst inlet.

Note, the average of ratio HC/NOx in the exhaust gas was 3.2 within the temperature range 130 to 280°C at the catalyst inlet and 1.0 within the : remaining temperature range 280 to 450°C at the catalyst inlet. Further, a spatial gas velocity during the measurement was about 32000 h$^{-1}$. Prior to the measurement of the NOx reduction purification rate, the respective catalysts were subjected to a pre-treatment (620°C×50 hours) in the exhaust gas of the diesel engine.

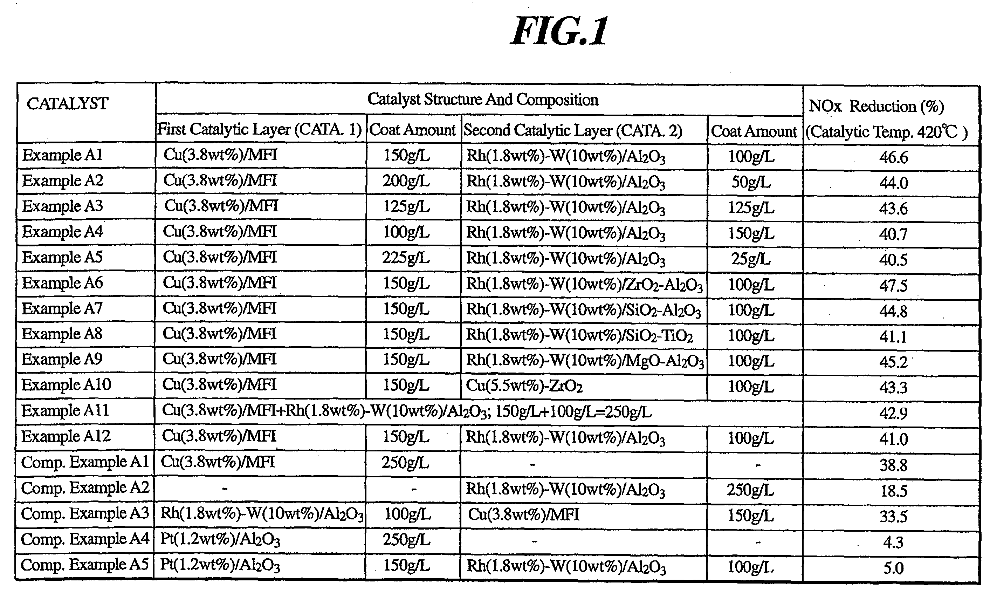

Fig. 1 shows the respective NOx reduction rates of the catalysts of the above examples and comparative examples, at the catalyst inlet temperature of 420°C. Note, respective layer structures of the catalysts are also shown in the Fig. 1.

From Fig. 1, it will be understood that the catalysts in the range of the invention obviously exhibit high NOx reduction rates, while an effect due to the above-mentioned combination is clearly produced and therefore, the catalysts of the present invention is effective in the NOx reduction capability.

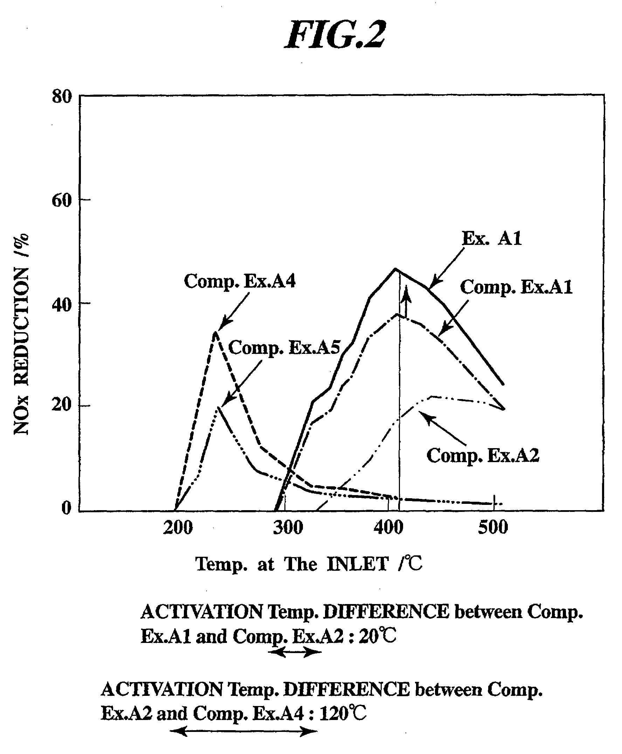

Additionally, Fig. 2 shows the results of comparison of the catalysts of the example A1 and the comparative examples A1, A2, A4 and A5, in terms of light-off characteristics.

From Fig. 2, it is found that although there is a difference of about 20°C between a temperature range activating the catalyst of the comparative example A1 and the temperature range activating the catalyst of the comparative example A2, the catalyst A1 resulting from combining the former with the latter exhibits the improved light-off characteristics due to the remarkable combined effects. On the contrary, in the catalysts of the comparative examples A4 and A5, there is a difference of about 100°C in temperature range activating the catalyst since the performance of the Rh type catalysts are negated each other.

Although we hereinabove describe the present invention in detail by the preferable examples, the present invention is not limited to these examples, so that various changes and modifications may be made without departing from the spirit and scope thereof.

For example, although we confirmed the constitution and effects of the invention while enumerating the combination of the Cu-MFI zeolite catalyst with the Rh type catalyst, this combination is nothing but one representative example, so that any combinations will be effective if only meeting the refined pore size or diameter and the difference in active temperature range which are defined by the invention.

In spite of a refractory inorganic compound of which pore size or diameter does not generally meet a designated value of the invention, if the material meets the designated value by various treatments such as high temperature baking, then it would be adopted as the material for the catalyst of the invention, of course.

(Example B1)

After immersing a mixture of alumina powder and tungstic oxide into a rhodium nitrate solution and sequent drying it at 150°C, a power-was obtained by baking the resulting substances at 400°C for one hour. Next, the powder was thrown into a bowl mill pot together with boehmite alumina, nitric acid and water for their mixing and crushing. Then, the so-obtained slurry was applied on a cordierite monolith carrier (0.1 L, 400 cells) and after drying, the carrier is baked at 800°C for one hour; thereby completing an objective catalyst B1. In this case, the $WO_3$ content of the catalyst B1 was 150 g/L; apply quantity of slurry was 160 g/L and quantity of carried Rh was 0.5 g/L.

(Example B2)

The exhaust gas purifying catalyst B2 was completed as similar to the example B1, except adjusting the quantity of using in order to realize the $WO_3$ content of 280 g/L, apply quantity of 380 g/L and carried Rh quantity of 1.1 g/L.

(Example B3)

The exhaust gas purifying catalyst B3 was completed as similar to the example B1, except adjusting the quantity of using in order to realize the $WO_3$ content of 350 g/L, apply quantity of 380 g/L and carried Rh quantity of 5.0 g/L.

(Example B4)

The exhaust gas purifying catalyst B4 was completed as similar to the example B1, except using alumina-silica oxide powder in place of alumina powder. Then, the $WO_3$ content was 150 g/L, apply quantity of 160 g/L and the carried Rh quantity was 0.5 g/L.

(Example B5)

The exhaust gas purifying catalyst B5 was completed as similar to the example B4, except adjusting the quantity of using in order to realize the $WO_3$ content of 280 g/L, apply quantity of 380 g/L and carried Rh quantity of 1.1 g/L.

(Example B6)

The exhaust gas purifying catalyst B6 was completed as similar to the example B4, except adjusting the quantity of using in order to realize the $WO_3$ content of 350 g/L, apply quantity of 380 g/L and carried Rh quantity of 5.0 g/L.

(Example B7)

The exhaust gas purifying catalyst B7 was completed as similar to the example B1, except using titania-silica oxide powder in place of alumina powder. Then, the $WO_3$ content was 150 g/L, apply quantity of 160 g/L and the carried Rh quantity was 0.5 g/L.

(Example B8)

The exhaust gas purifying catalyst B8 was completed as similar to the example B7, except adjusting the quantity of using in order to realize the $WO_3$ content of 280 g/L, apply quantity of 380 g/L and carried Rh quantity of 1.1 g/L.

(Example B9)

The exhaust gas purifying catalyst B9 was completed as similar to the example B7, except adjusting the quantity of using in order to realize the $WO_3$ content of 350 g/L, apply quantity of 380 g/L and carried Rh quantity of 5.0 g/L.

(Example B10)

The exhaust gas purifying catalyst B10 was completed as similar to the example B1, except using magnesia-silica oxide powder in place of alumina powder. Then, the $WO_3$ content was 150 g/L, apply quantity of 160 g/L and the carried Rh quantity was 0.5 g/L.

(Example B11)

The exhaust gas purifying catalyst B11 was completed as similar to the example B10, except adjusting the quantity of using in order to realize the $WO_3$ content of 280 g/L, apply quantity of 380 g/L and carried Rh quantity of 1.1 g/L.

(Example B12)

The exhaust gas purifying catalyst B12 was completed as similar to the example B10, except adjusting the quantity of using in order to realize the $WO_3$ content of 350 g/L, apply quantity of 380 g/L and carried Rh quantity of 5.0 g/L.

(Example B13)

The exhaust gas purifying catalyst B13 was completed as similar to the example B1, except using ceria-silica oxide powder in place of alumina powder. Then, the $WO_3$ content was 150 g/L, apply quantity of 160 g/L and the carried Rh quantity was 0.5 g/L.

(Example B14)

The exhaust gas purifying catalyst B14 was completed as similar to the example B13, except adjusting the quantity of using in order to realize the $WO_3$ content of 280 g/L, apply quantity of 380 g/L and carried Rh quantity of 1.1 g/L.

(Example B15)

The exhaust gas purifying catalyst B15 was completed as similar to the example B13, except adjusting the quantity of using in order to realize the $WO_3$ content of 350 g/L, apply quantity of 380 g/L and carried Rh quantity of 5.0 g/L.

(Example B16)

The exhaust gas purifying catalyst B16 was completed as similar to the example B1, except using MFI type zeolite powder in place of alumina powder. Then, the $WO_3$ content was 150 g/L, apply quantity of 160 g/L and the carried Rh quantity was 0.5 g/L.

(Example B17)

The exhaust gas purifying catalyst B17 was completed as similar to the example B16, except adjusting the quantity of using in order to realize the $WO_3$ content of 280 g/L, apply quantity of 380 g/L and carried Rh quantity of 1.1 g/L.

(Example B18)

The exhaust gas purifying catalyst B18 was completed as similar to the example B16, except adjusting the quantity of using in order to realize the $WO_3$ content of 280 g/L, apply quantity of 380 g/L and carried Rh quantity of 5.0 g/L.

(Example B19)

The exhaust gas purifying catalyst B19 was completed as similar to the example B1, except using mordenite type zeolite powder in place of alumina powder. Then, the $WO_3$ content was 150 g/L, apply quantity of 160 g/L and the carried Rh quantity was 0.5 g/L.

(Example B20)

The exhaust gas purifying catalyst B20 was completed as similar to the example B19, except adjusting the quantity of using in order to realize the $WO_3$ content of 280 g/L, apply quantity of 380 g/L and carried Rh quantity of 1.1 g/L.

(Example B21)

The exhaust gas purifying catalyst B21 was completed as similar to the example B19, except adjusting the quantity of using in order to realize the $WO_3$ content of 350 g/L, apply quantity of 380 g/L and carried Rh quantity of 5.0 g/L.

(Example B22)

The exhaust gas purifying catalyst B22 was completed as similar to the example B1, except using Y type zeolite powder in place of alumina powder. Then, the $WO_3$ content was 150 g/L, apply quantity of 160 g/L and the carried Rh quantity was 0.5 g/L.

(Example B23)

The exhaust gas purifying catalyst B23 was completed as similar to the example B22, except adjusting the quantity of using in order to realize the $WO_3$ content of 280 g/L, apply quantity of 380 g/L and carried Rh quantity of 1.1 g/L.

(Example B24)

The exhaust gas purifying catalyst B24 was completed as similar to the example B22, except adjusting the quantity of using in order to realize the $WO_3$ content of 350 g/L, apply quantity of 380 g/L and carried Rh quantity of 5.0 g/L.

(Example B25)

The exhaust gas purifying catalyst B25 was completed as similar to the example B1, except using $\beta$ zeolite powder in place of alumina powder. Then, the $WO_3$ content was 150 g/L, apply quantity of 160 g/L and the carried Rh quantity was 0.5 g/L.

(Example B26)

The exhaust gas purifying catalyst B26 was completed as similar to the example B25, except adjusting the quantity of using in order to realize the $WO_3$ content of 280 g/L, apply quantity of 380 g/L and carried Rh quantity of 1.1 g/L.

(Example B27)

The exhaust gas purifying catalyst B27 was completed as similar to the example B25, except adjusting the quantity of using in order to realize the $WO_3$ content of 350 g/L, apply quantity of 380 g/L and carried Rh quantity of 5.0 g/L.

(Comparative Example B1)

The exhaust gas purifying catalyst Ref. B1 was completed as similar to the example B1, except adjusting the quantity of using in order to realize the $WO_3$ content of 550 g/L, apply quantity of 600 g/L and carried Rh quantity of 0.33 g/L.

(Comparative Example B2)

The exhaust gas purifying catalyst Ref. B2 was completed as similar to the comparative example B1, except adjusting the quantity of using in order to realize the $WO_3$ content of 100 g/L, apply quantity of 600 g/L and carried Rh quantity of 0.33 g/L.

(Comparative Example B3)

The exhaust gas purifying catalyst Ref. B3 was completed as similar to the comparative example B1, except adjusting the quantity of using in order to realize the $WO_3$ content of 100 g/L, apply quantity of 150 g/L and carried Rh quantity of 0.0005 g/L.

(Comparative Example B4)

The exhaust gas purifying catalyst Ref. B4 was completed as similar to the comparative example B1, except adjusting the quantity of using in order to realize the $WO_3$ content of 100 g/L, apply quantity of 150 g/L and carried Rh quantity of 0.33 g/L.

(Comparative Example B5)

The exhaust gas purifying catalyst Ref. B5 was completed as similar to the comparative example B1, except adjusting the quantity of using in order to realize the $WO_3$ content of 100 g/L, apply quantity of 150 g/L and carried Rh quantity of 0.33 g/L, and finally baking it at 500 °C.

(Comparative Example B6)

The exhaust gas purifying catalyst Ref. B6 was completed as similar to the comparative example B1, except using magnesia powder in place of alumina powder and adjusting the quantity of using in order to realize the $WO_3$ content of 100 g/L, apply quantity of 150 g/L and carried Rh quantity of 0.33 g/L.

(Comparative Example B7)

The exhaust gas purifying catalyst Ref. B7 was completed as similar to the example B4, except adjusting the quantity of using in order to realize the $WO_3$ content of 550 g/L, apply quantity of 600 g/L and carried Rh quantity of 0.33 g/L.

(Comparative Example B8)

The exhaust gas purifying catalyst Ref. B8 was completed as similar to the comparative example B7, except adjusting the quantity of using in order to realize the $WO_3$ content of 100 g/L, apply quantity of 600 g/L and carried Rh quantity of 0.33 g/L.

(Comparative Example B9)

The exhaust gas purifying catalyst Ref. B9 was completed as similar to the comparative example B7, except adjusting the quantity of using in order to realize the $WO_3$ content of 100 g/L, apply quantity of 150 g/L and carried Rh quantity of 0.0005 g/L.

(Comparative Example B10)

The exhaust gas purifying catalyst Ref. B10 was completed as similar to the comparative example B7, except adjusting the quantity of using in order to realize the $WO_3$ content of 100 g/L, apply quantity of 150 g/L and carried Rh quantity of 0.33 g/L.

(Comparative Example B11)

The exhaust gas purifying catalyst Ref. B11 was completed as similar to the comparative example B7, except adjusting the quantity of using in order to realize the $WO_3$ content of 100 g/L, apply quantity of 150 g/L and carried Rh quantity of 0.33 g/L, and finally baking it at 500 °C.

(Comparative Example B12)

The exhaust gas purifying catalyst Ref. B12 was completed as similar to the example B7, except adjusting the quantity of using in order to realize the $WO_3$ content of 550 g/L, apply quantity of 600 g/L and carried Rh quantity of 0.33 g/L.

(Comparative Example B13)

The exhaust gas purifying catalyst Ref. B13 was completed as similar to the comparative example B12, except adjusting the quantity of using in order to realize the $WO_3$ content of 100 g/L, apply quantity of 600 g/L and carried Rh quantity of 0.33 g/L.

(Comparative Example B14)

The exhaust gas purifying catalyst Ref. B14 was completed as similar to the comparative example B12, except adjusting the quantity of using in order to realize the $WO_3$ content of 100 g/L, apply quantity of 150 g/L and carried Rh quantity of 0.0005 g/L.

(Comparative Example B15)

The exhaust gas purifying catalyst Ref. B15 was completed as similar to the comparative example B12, except adjusting the quantity of using in order to realize the $WO_3$ content of 100 g/L, apply quantity of 150 g/L and carried Rh quantity of 0.33 g/L.

(Comparative Example B16)

The exhaust gas purifying catalyst Ref. B16 was completed as similar to the comparative example B12, except adjusting the quantity of using in order to realize the $WO_3$ content of 100 g/L, apply quantity of 150 g/L and carried Rh quantity of 0.33 g/L and finally baking it at 500 °C.

(Comparative Example B17)

The exhaust gas purifying catalyst Ref. B17 was completed as similar to the example B10, except adjusting the quantity of using in order to realize the $WO_3$ content of 550 g/L, apply quantity of 600 g/L and carried Rh quantity of 0.33 g/L.

(Comparative Example B18)

The exhaust gas purifying catalyst Ref. B18 was completed as similar to the comparative example B17, except adjusting the quantity of using in order to realize the $WO_3$ content of 100 g/L, apply quantity of 600 g/L and carried Rh quantity of 0.33 g/L.

(Comparative Example B19)

The exhaust gas purifying catalyst Ref. B19 was completed as similar to the comparative example B17, except adjusting the quantity of using in order to realize the $WO_3$ content of 100 g/L, apply quantity of 150 g/L and carried Rh quantity of 0.0005 g/L.

(Comparative Example B20)

The exhaust gas purifying catalyst Ref. B20 was completed as similar to the comparative example B17, except adjusting the quantity of using in order to realize the $WO_3$ content of 100 g/L, apply quantity of 150 g/L and carried Rh quantity of 0.33 g/L.

(Comparative Example B21)

The exhaust gas purifying catalyst Ref. B21 was completed as similar to the comparative example B17, except adjusting the quantity of using in order to realize the $WO_3$ content of 100 g/L, apply quantity of 150 g/L and carried Rh quantity of 0.33 g/L and finally baking it at 500 °C.

(Comparative Example B22)

The exhaust gas purifying catalyst Ref. B22 was completed as similar to the example B13, except adjusting the quantity of using in order to realize the $WO_3$ content of 550 g/L, apply quantity of 600 g/L and carried Rh quantity of 0.33 g/L.

(Comparative Example B23)

The exhaust gas purifying catalyst Ref. B23 was completed as similar to the comparative example B22, except adjusting the quantity of using in order to realize the $WO_3$ content of 100 g/L, apply quantity of 600 g/L and carried Rh quantity of 0.33 g/L.

(Comparative Example B24)

The exhaust gas purifying catalyst Ref. B24 was completed as similar to the comparative example B22, except adjusting the quantity of using in order to realize the $WO_3$ content of 100 g/L, apply quantity of 150 g/L and carried Rh quantity of 0.0005 g/L.

(Comparative Example B25)

The exhaust gas purifying catalyst Ref. B25 was completed as similar to the comparative example B22, except adjusting the quantity of using in order to realize the $WO_3$ content of 100 g/L, apply quantity of 150 g/L and carried Rh quantity of 0.33 g/L.

(Comparative Example B26)

The exhaust gas purifying catalyst Ref. B26 was completed as similar to the comparative example B22, except adjusting the quantity of using in order to realize the $WO_3$ content of 100 g/L, apply quantity of 150 g/L and carried Rh quantity of 0.33 g/L and finally baking it at 500 °C.

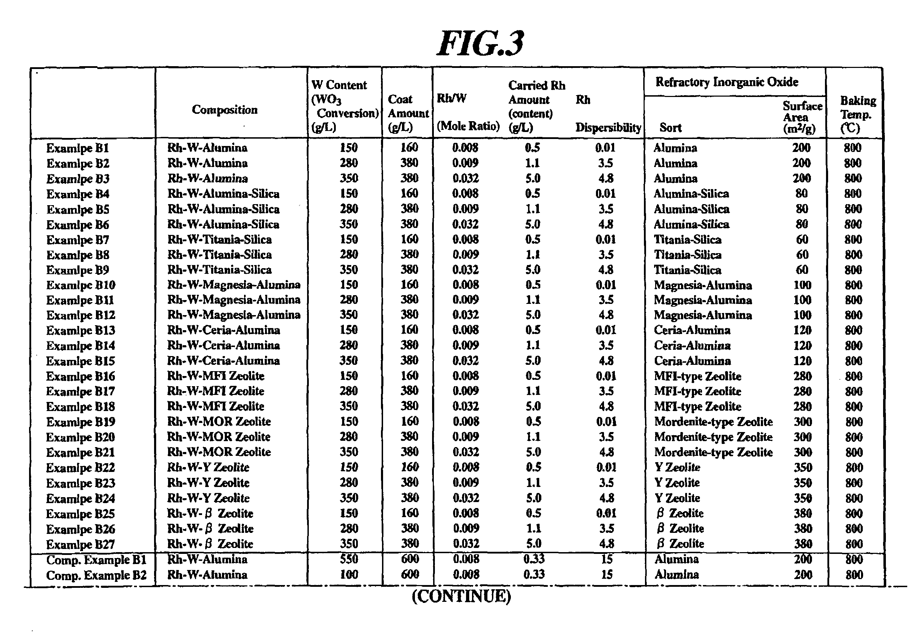

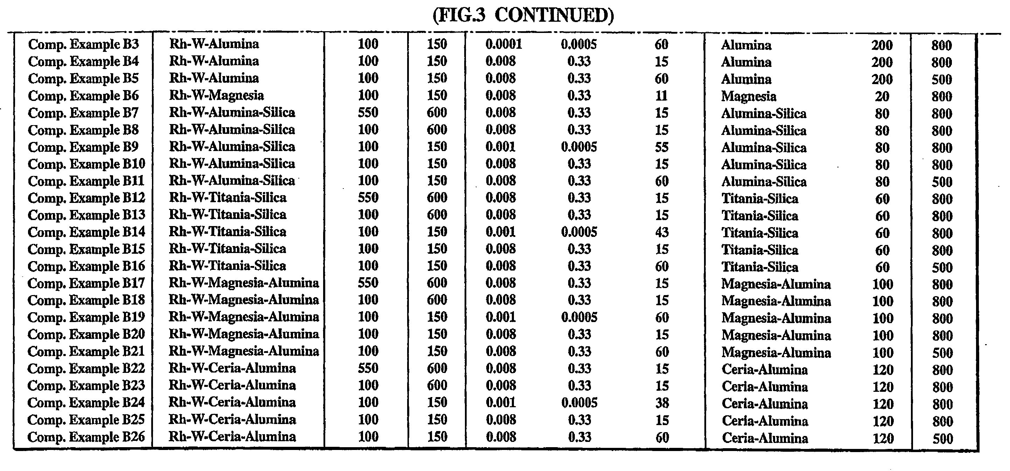

Fig. 3 shows respective compositions of the resultant exhaust gas purifying catalysts of the above examples B1 to B27 and the above comparative examples B1 to B26.

[Dispersibility Measurement Method]

In a pre-treatment, a catalyst sample was kept at a temperature of 400 °C under an oxygen atmosphere for 15 minutes, successively at a temperature of 400 °C under a He atmosphere for 15 minutes, at a temperature of 400 °C under a hydrogen atmosphere for 15 minutes, and at a temperature of 400 °C under a He atmosphere for 15 minutes. In a measurement, a sample of approximately 0.05 g was filled in a reaction tube, and is kept at a temperature of 50 °C. CO of 0.5 cc was poured into the tube in a pulse, and thus finding an adsorption amount of CO to the catalyst sample. A TCD type gas chromatograph was made use of as a CO detector.

In an analysis, it was assumed that CO per one molecule had been adsorbed by noble metal per one atom, thereby calculating an exposure area of the noble metal (See「CATAYST」(Catalyst Society of Japan) vol. 28, NO. 1 (1986) page. 41 to 45).

[Test Example]

Against the exhaust gas purifying catalysts obtained by the examples B1 to B27 and the comparative examples B1 to B26, their catalytic activities were respectively estimated under the following conditions. In accordance with the activity estimation, after producing a reaction of propane and propylene to nitrogen oxide while using model gas in imitation of the automotive exhaust gas, an automatic estimation unit equipped with a chemical-emission type nitrogen oxide analyzer (manu. by Horiba Co. Ltd.) was used.

Further, representing the stoichiometric mixture ratio of oxidative gas ($NO$, $O_2$) to reduction gas ($CO$, $C_3H_6$, $C_3H_8$), L value employed in this estimation is defined by the following expression.

$$L = ([NO \text{ concentration}] \times 1 + [O_2 \text{ concentration}] \times 2) / \{[CO$$

$$\text{concentration}] \times 1 + 1/3 \times ([C_3H_6 \text{ concentration (C1 conversion)}] \times 9 +$$

$$[C_3H_8 \text{ concentration (C1 conversion)}] \times 10)\}$$

$$= (0.02 + 6 \times 2) / \{0.2 + 1/3(0.2 \times 9 + 0.1 \times 10)\} = 10.6 \text{ (lean atmosphere)}$$

Conditions of Activity Test

| | |
|---|---|
| catalyst: | 0.6L honeycomb coated catalyst |
| total gas flow: | 200L/min. |
| catalyst inlet gas temperature: | 300-600°C |
| temp. rising speed: | 10 °C/min. |
| inlet gas composition: | comp. of model gas corresponding to 20.0 in mean air-fuel ratio (L=10.6) |

| | | |
|---|---|---|
| | CO: | 0.2 % |
| | HC: | 3000 p.p.m.C($C_3H_6$+$C_3H_8$) |
| | NO: | 200 p.p.m. |
| | $O_2$: | 6.00 % |
| | $CO_2$: | 10.0 % |
| | $H_2O$: | 10.0 % |
| | $N_2$: | balance |

| | |
|---|---|
| A/F deflection | nothing |

The estimated value of catalytic activity was determined by the following expression:

Conversion Rate of NOx (%) = ([NOx concentration at total

catalyst inlets] — [NOx concentration at total catalyst outlets]) / [NOx

concentration at total catalyst inlets]

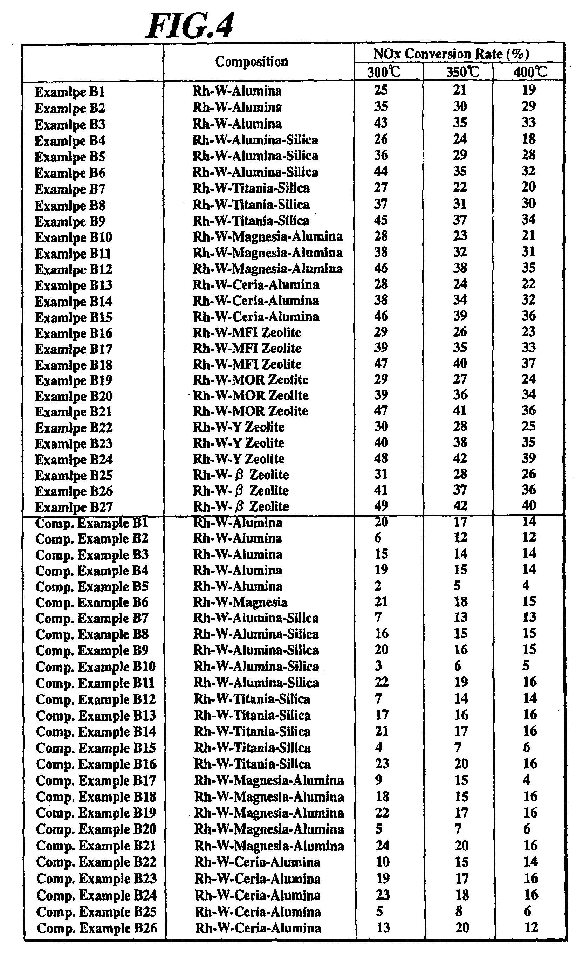

The obtained estimation results of catalytic activity is shown in Fig. 4.

Note: In the diagram, "Rh/W" is the molar ratio of Rh to W calculated from both material of Rh and weight of $WO_3$, "Rh dispersibility" is an actual-measured value in accordance with the dispersibility measuring method.

The entire content of Japanese Patent Application P-10-304839 (filed October 27, 1998) and Japanese Patent Application P-10-248117 (filed September 2, 1998) is incorporated herein by reference.

Although the invention has been described above by reference to certain embodiments of the invention, the invention is not limited to the embodiments described above, Modifications and variations of the embodiments described above will occur to those skilled in the art, in light of the above teachings. The scope of the invention is defined with reference to the following claims.

**Claims**

1. An exhaust gas purifying catalyst for an internal combustion engine, the engine being operative at lean air-fuel comprising:

   a first catalytic material containing a first refractory inorganic compound having pores of equal to or less than 1 nm in size, the first catalytic material having a first activation temperature to reduce a NOx emission of the engine; and
   a second catalytic material containing a second refractory inorganic compound having pores of equal to or more than 2 nm in size, the second catalytic material having a second activation temperature to reduce the NOx emission,

   wherein said first and second activation temperature are within a range of 30 °C relative to each other.

2. The exhaust gas purifying catalyst of claim 1, having a double-layered structure and comprising: an inside layer containing the first catalytic material, the inside layer being coated on a carrier; and an outside layer containing the second catalytic material, the outside layer being laminated on the inside layer.

3. The exhaust gas purifying catalyst of claim 1, wherein said first catalytic material contains a MFI-type zeolite carrying copper.

4. The exhaust gas purifying catalyst of claim 3, wherein said second catalytic material contains rhodium.

5. The exhaust gas purifying catalyst of claim 1, wherein said second catalytic material contains rhodium.

6. The exhaust gas purifying catalyst of claim 5,
   wherein said second refractory inorganic compound is selected from a group consisting of alumina, silica-alumina, titania-silica, magnesia-alumina and ceria-alumina,
   said second catalyst contains tungsten as a tungstic oxide of 150 to 500 g per liter of a volume of said second catalyst, and
   a content of rhodium is:

   (1) 0.001 to 0.032 in molar ratio with respect to a content of tungsten; and
   (2) 0.15 to 5.0 g per liter of said volume of second catalyst.

7. The exhaust gas purifying catalyst of claim 1,
   wherein said first and second activation temperature are within a range of 20 °C relative to each other.

8. The exhaust gas purifying catalyst of claim 1,
   wherein said second refractory inorganic compound has pores within a size range between 10 nm and 35 nm.

**Patentansprüche**

1.  Katalysator zur Reinigung von Abgasen für einen Verbrennungsmotor, wobei der Motor mit einem Magergemisch betreibbar ist, umfassen:

    ein erstes katalytisches Material, enthaltend eine erste anorganische feuerfeste Verbindung mit Poren mit einer Größe von 1 nm oder weniger,

    wobei das erste katalytische Material eine erste Aktivierungstemperatur aufweist, um eine NOx Emission des Motors zu reduzieren; und
    ein zweites katalytisches Material, enthaltend eine zweite anorganische feuerfeste Verbindung mit Poren mit einer Größe von 2 nm oder mehr, wobei das zweite katalytische Material eine zweite Aktivierungstemperatur aufweist, um die NOx Emission zu reduzieren,
    wobei die erste und zweite Aktivierungstemperatur innerhalb eines Bereichs von 30°C relativ zueinander liegen.

2.  Katalysator zur Reinigung von Abgasen nach Anspruch 1, mit einer Zweischichtstruktur und umfassend: eine Innenschicht, enthaltend das erste katalytische Material, wobei die Innenschicht auf einem Träger aufgebracht ist; und eine Außenschicht, enthaltend das zweite katalytische Material,
    wobei die Außenschicht auf der Innenschicht laminiert ist. I

3.  Katalysator zur Reinigung von Abgasen nach Anspruch 1, wobei das erste katalytische Material einen Kupfer tragenden Zeolith vom MFI-Typ enthält.

4.  Katalysator zur Reinigung von Abgasen nach Anspruch 3, wobei das zweite katalytische Material Rhodium enthält.

5.  Katalysator zur Reinigung von Abgasen nach Anspruch 1, wobei das zweite katalytische Material Rhodium enthält.

6.  Katalysator zur Reinigung von Abgasen nach Anspruch 5,
    wobei die zweite feuerfeste anorganische Verbindung aus einer Gruppe gewählt ist, bestehend aus Aluminiumoxid, Siliciumdioxid-Aluminiumoxid, Titandioxid-Siliciumdioxid, Magnesiumoxid-Aluminiumoxid und Ceroxid-Aluminumoxid,
    wobei der zweite Katalysator Wolfram als Wolframoxid mit 150 bis 500 g je Liter eines Volumens des zweite Katalysators enthält, und
    ein Gehalt an Rhodium ist:

    (1) 0,001 bis 0,032 im Molverhältnis in Bezug auf einen Gehalt an Wolfram; und
    (2) 0,15 bis 5,0 g je Liter des Volumens des zweiten Katalysators.

7.  Katalysator zur Reinigung von Abgasen nach Anspruch 1, wobei die erste und zweite Aktivierungstemperatur innerhalb eines Bereichs von 20°C relativ zueinander liegen.

8.  Katalysator zur Reinigung von Abgasen nach Anspruch 1, wobei die zweite feuerfeste anorganische Verbindung Poren innerhalb eines Größenbereichs zwischen 10 nm und 35 nm aufweist.

**Revendications**

1.  Catalyseur de purification de gaz d'échappement pour un moteur à combustion interne, le moteur fonctionnant à un rapport air-carburant pauvre comprenant

    un premier matériau catalytique contenant un premier composé inorganique réfractaire ayant des pores égaux à ou de moins de 1 nm de dimension, le matériau catalytique ayant une première température d'activation pour réduire l'émission de NOx par le moteur ;
    un second matériau catalytique contenant un second composé inorganique réfractaire ayant des pores de 2 nm ou plus en dimension, le second matériau catalytique ayant une seconde température d'activation pour réduire l'émission de NOx

    où lesdites première et seconde températures d'activation sont dans une gamme de 30°C relativement l'une à l'autre.

2. Catalyseur de purification de gaz d'échappement de la revendication 1, ayant une structure à deux couches et comprenant : une couche intérieure contenant le premier matériau catalytique, la couche intérieure étant enduite sur un support ; et une couche extérieure contenant le second matériau catalytique, la couche extérieure étant stratifiée sur la couche intérieure.

3. Catalyseur de purification de gaz d'échappement de la revendication 1, où ledit premier matériau catalytique contient de la zéolite du type MFI portant du cuivre.

4. Catalyseur de purification de gaz d'échappement de la revendication 3, où ledit second matériau catalytique contient du rhodium.

5. Catalyseur de purification de gaz d'échappement de la revendication 1, où ledit second matériau catalytique contient du rhodium.

6. Catalyseur de purification de gaz d'échappement de la revendication 5, où ledit second composé inorganique réfractaire est sélectionné dans un groupe consistant en alumine, aluminosilicate, oxyde de titane-silice, magnésie-alumine et oxyde de cérium-alumine,
   ledit second catalyseur contient du tungstène sous la forme d'oxyde tungstique de 150 à 500 g par litre d'un volume dudit second catalyseur, et
   une teneur en rhodium est :

   (1) 0,001 à 0,032 en rapport molaire par rapport à une teneur en tungstène ; et
   (2) 0,15 à 5,0 g par litre dudit volume du second catalyseur.

7. Catalyseur de purification de gaz d'échappement de la revendication 1, où lesdites première et seconde températures d'activation sont dans une gamme de 20°C l'une relativement à l'autre.

8. Catalyseur de purification de gaz d'échappement de la revendication 1, où ledit second composé organique réfractaire a des pores dans une gamme de dimension entre 10 nm et 35 nm.

# FIG.1

| CATALYST | Catalyst Structure And Composition | | | | NOx Reduction (%) |
| | First Catalytic Layer (CATA. 1) | Coat Amount | Second Catalytic Layer (CATA. 2) | Coat Amount | (Catalytic Temp. 420°C) |
|---|---|---|---|---|---|
| Example A1 | Cu(3.8wt%)/MFI | 150g/L | Rh(1.8wt%)-W(10wt%)/Al$_2$O$_3$ | 100g/L | 46.6 |
| Example A2 | Cu(3.8wt%)/MFI | 200g/L | Rh(1.8wt%)-W(10wt%)/Al$_2$O$_3$ | 50g/L | 44.0 |
| Example A3 | Cu(3.8wt%)/MFI | 125g/L | Rh(1.8wt%)-W(10wt%)/Al$_2$O$_3$ | 125g/L | 43.6 |
| Example A4 | Cu(3.8wt%)/MFI | 100g/L | Rh(1.8wt%)-W(10wt%)/Al$_2$O$_3$ | 150g/L | 40.7 |
| Example A5 | Cu(3.8wt%)/MFI | 225g/L | Rh(1.8wt%)-W(10wt%)/Al$_2$O$_3$ | 25g/L | 40.5 |
| Example A6 | Cu(3.8wt%)/MFI | 150g/L | Rh(1.8wt%)-W(10wt%)/ZrO$_2$-Al$_2$O$_3$ | 100g/L | 47.5 |
| Example A7 | Cu(3.8wt%)/MFI | 150g/L | Rh(1.8wt%)-W(10wt%)/SiO$_2$-Al$_2$O$_3$ | 100g/L | 44.8 |
| Example A8 | Cu(3.8wt%)/MFI | 150g/L | Rh(1.8wt%)-W(10wt%)/SiO$_2$-TiO$_2$ | 100g/L | 41.1 |
| Example A9 | Cu(3.8wt%)/MFI | 150g/L | Rh(1.8wt%)-W(10wt%)/MgO-Al$_2$O$_3$ | 100g/L | 45.2 |
| Example A10 | Cu(3.8wt%)/MFI | 150g/L | Cu(5.5wt%)-ZrO$_2$ | 100g/L | 43.3 |
| Example A11 | Cu(3.8wt%)/MFI+Rh(1.8wt%)-W(10wt%)/Al$_2$O$_3$; 150g/L+100g/L=250g/L | | | | 42.9 |
| Example A12 | Cu(3.8wt%)/MFI | 150g/L | Rh(1.8wt%)-W(10wt%)/Al$_2$O$_3$ | 100g/L | 41.0 |
| Comp. Example A1 | Cu(3.8wt%)/MFI | 250g/L | - | - | 38.8 |
| Comp. Example A2 | - | - | Rh(1.8wt%)-W(10wt%)/Al$_2$O$_3$ | 250g/L | 18.5 |
| Comp. Example A3 | Rh(1.8wt%)-W(10wt%)/Al$_2$O$_3$ | 100g/L | Cu(3.8wt%)/MFI | 150g/L | 33.5 |
| Comp. Example A4 | Pt(1.2wt%)/Al$_2$O$_3$ | 250g/L | - | - | 4.3 |
| Comp. Example A5 | Pt(1.2wt%)/Al$_2$O$_3$ | 150g/L | Rh(1.8wt%)-W(10wt%)/Al$_2$O$_3$ | 100g/L | 5.0 |

EP 0 983 787 B1

# FIG.2

ACTIVATION Temp. DIFFERENCE between Comp.
Ex.A1 and Comp. Ex.A2 : 20℃

ACTIVATION Temp. DIFFERENCE between Comp.
Ex.A2 and Comp. Ex.A4 : 120℃

# FIG.3

| | Composition | W Content (WO₃ Conversion) (g/L) | Coat Amount (g/L) | Rh/W (Mole Ratio) | Carried Rh Amount (content) (g/L) | Rh Dispersibility | Refractory Inorganic Oxide | | Baking Temp. (℃) |
|---|---|---|---|---|---|---|---|---|---|
| | | | | | | | Sort | Surface Area (m²/g) | |
| Examlpe B1 | Rh-W-Alumina | 150 | 160 | 0.008 | 0.5 | 0.01 | Alumina | 200 | 800 |
| Examlpe B2 | Rh-W-Alumina | 280 | 380 | 0.009 | 1.1 | 3.5 | Alumina | 200 | 800 |
| Examlpe B3 | Rh-W-Alumina | 350 | 380 | 0.032 | 5.0 | 4.8 | Alumina | 200 | 800 |
| Examlpe B4 | Rh-W-Alumina-Silica | 150 | 160 | 0.008 | 0.5 | 0.01 | Alumina-Silica | 80 | 800 |
| Examlpe B5 | Rh-W-Alumina-Silica | 280 | 380 | 0.009 | 1.1 | 3.5 | Alumina-Silica | 80 | 800 |
| Examlpe B6 | Rh-W-Alumina-Silica | 350 | 380 | 0.032 | 5.0 | 4.8 | Alumina-Silica | 80 | 800 |
| Examlpe B7 | Rh-W-Titania-Silica | 150 | 160 | 0.008 | 0.5 | 0.01 | Titania-Silica | 60 | 800 |
| Examlpe B8 | Rh-W-Titania-Silica | 280 | 380 | 0.009 | 1.1 | 3.5 | Titania-Silica | 60 | 800 |
| Examlpe B9 | Rh-W-Titania-Silica | 350 | 380 | 0.032 | 5.0 | 4.8 | Titania-Silica | 60 | 800 |
| Examlpe B10 | Rh-W-Magnesia-Alumina | 150 | 160 | 0.008 | 0.5 | 0.01 | Magnesia-Alumina | 100 | 800 |
| Examlpe B11 | Rh-W-Magnesia-Alumina | 280 | 380 | 0.009 | 1.1 | 3.5 | Magnesia-Alumina | 100 | 800 |
| Examlpe B12 | Rh-W-Magnesia-Alumina | 350 | 380 | 0.032 | 5.0 | 4.8 | Magnesia-Alumina | 100 | 800 |
| Examlpe B13 | Rh-W-Ceria-Alumina | 150 | 160 | 0.008 | 0.5 | 0.01 | Ceria-Alumina | 120 | 800 |
| Examlpe B14 | Rh-W-Ceria-Alumina | 280 | 380 | 0.009 | 1.1 | 3.5 | Ceria-Alumina | 120 | 800 |
| Examlpe B15 | Rh-W-Ceria-Alumina | 350 | 380 | 0.032 | 5.0 | 4.8 | Ceria-Alumina | 120 | 800 |
| Examlpe B16 | Rh-W-MFI Zeolite | 150 | 160 | 0.008 | 0.5 | 0.01 | MFI-type Zeolite | 280 | 800 |
| Examlpe B17 | Rh-W-MFI Zeolite | 280 | 380 | 0.009 | 1.1 | 3.5 | MFI-type Zeolite | 280 | 800 |
| Examlpe B18 | Rh-W-MFI Zeolite | 350 | 380 | 0.032 | 5.0 | 4.8 | MFI-type Zeolite | 280 | 800 |
| Examlpe B19 | Rh-W-MOR Zeolite | 150 | 160 | 0.008 | 0.5 | 0.01 | Mordenite-type Zeolite | 300 | 800 |
| Examlpe B20 | Rh-W-MOR Zeolite | 280 | 380 | 0.009 | 1.1 | 3.5 | Mordenite-type Zeolite | 300 | 800 |
| Examlpe B21 | Rh-W-MOR Zeolite | 350 | 380 | 0.032 | 5.0 | 4.8 | Mordenite-type Zeolite | 300 | 800 |
| Examlpe B22 | Rh-W-Y Zeolite | 150 | 160 | 0.008 | 0.5 | 0.01 | Y Zeolite | 350 | 800 |
| Examlpe B23 | Rh-W-Y Zeolite | 280 | 380 | 0.009 | 1.1 | 3.5 | Y Zeolite | 350 | 800 |
| Examlpe B24 | Rh-W-Y Zeolite | 350 | 380 | 0.032 | 5.0 | 4.8 | Y Zeolite | 350 | 800 |
| Examlpe B25 | Rh-W-β Zeolite | 150 | 160 | 0.008 | 0.5 | 0.01 | β Zeolite | 380 | 800 |
| Examlpe B26 | Rh-W-β Zeolite | 280 | 380 | 0.009 | 1.1 | 3.5 | β Zeolite | 380 | 800 |
| Examlpe B27 | Rh-W-β Zeolite | 350 | 380 | 0.032 | 5.0 | 4.8 | β Zeolite | 380 | 800 |
| Comp. Example B1 | Rh-W-Alumina | 550 | 600 | 0.008 | 0.33 | 15 | Alumina | 200 | 800 |
| Comp. Example B2 | Rh-W-Alumina | 100 | 600 | 0.008 | 0.33 | 15 | Alumina | 200 | 800 |

(CONTINUE)

EP 0 983 787 B1

(FIG.3 CONTINUED)

| | | | | | | | | | |
|---|---|---|---|---|---|---|---|---|---|
| Comp. Example B3 | Rh-W-Alumina | 100 | 150 | 0.0001 | 0.0005 | 60 | Alumina | 200 | 800 |
| Comp. Example B4 | Rh-W-Alumina | 100 | 150 | 0.008 | 0.33 | 15 | Alumina | 200 | 800 |
| Comp. Example B5 | Rh-W-Alumina | 100 | 150 | 0.008 | 0.33 | 60 | Alumina | 200 | 500 |
| Comp. Example B6 | Rh-W-Magnesia | 100 | 150 | 0.008 | 0.33 | 11 | Magnesia | 20 | 800 |
| Comp. Example B7 | Rh-W-Alumina-Silica | 550 | 600 | 0.008 | 0.33 | 15 | Alumina-Silica | 80 | 800 |
| Comp. Example B8 | Rh-W-Alumina-Silica | 100 | 600 | 0.008 | 0.33 | 15 | Alumina-Silica | 80 | 800 |
| Comp. Example B9 | Rh-W-Alumina-Silica | 100 | 150 | 0.001 | 0.0005 | 55 | Alumina-Silica | 80 | 800 |
| Comp. Example B10 | Rh-W-Alumina-Silica | 100 | 150 | 0.008 | 0.33 | 15 | Alumina-Silica | 80 | 800 |
| Comp. Example B11 | Rh-W-Alumina-Silica | 100 | 150 | 0.008 | 0.33 | 60 | Alumina-Silica | 80 | 500 |
| Comp. Example B12 | Rh-W-Titania-Silica | 550 | 600 | 0.008 | 0.33 | 15 | Titania-Silica | 60 | 800 |
| Comp. Example B13 | Rh-W-Titania-Silica | 100 | 600 | 0.008 | 0.33 | 15 | Titania-Silica | 60 | 800 |
| Comp. Example B14 | Rh-W-Titania-Silica | 100 | 150 | 0.001 | 0.0005 | 43 | Titania-Silica | 60 | 800 |
| Comp. Example B15 | Rh-W-Titania-Silica | 100 | 150 | 0.008 | 0.33 | 15 | Titania-Silica | 60 | 800 |
| Comp. Example B16 | Rh-W-Titania-Silica | 100 | 150 | 0.008 | 0.33 | 60 | Titania-Silica | 60 | 500 |
| Comp. Example B17 | Rh-W-Magnesia-Alumina | 550 | 600 | 0.008 | 0.33 | 15 | Magnesia-Alumina | 100 | 800 |
| Comp. Example B18 | Rh-W-Magnesia-Alumina | 100 | 600 | 0.008 | 0.33 | 15 | Magnesia-Alumina | 100 | 800 |
| Comp. Example B19 | Rh-W-Magnesia-Alumina | 100 | 150 | 0.001 | 0.0005 | 60 | Magnesia-Alumina | 100 | 800 |
| Comp. Example B20 | Rh-W-Magnesia-Alumina | 100 | 150 | 0.008 | 0.33 | 15 | Magnesia-Alumina | 100 | 800 |
| Comp. Example B21 | Rh-W-Magnesia-Alumina | 100 | 150 | 0.008 | 0.33 | 60 | Magnesia-Alumina | 100 | 500 |
| Comp. Example B22 | Rh-W-Ceria-Alumina | 550 | 600 | 0.008 | 0.33 | 15 | Ceria-Alumina | 120 | 800 |
| Comp. Example B23 | Rh-W-Ceria-Alumina | 100 | 600 | 0.008 | 0.33 | 15 | Ceria-Alumina | 120 | 800 |
| Comp. Example B24 | Rh-W-Ceria-Alumina | 100 | 150 | 0.001 | 0.0005 | 38 | Ceria-Alumina | 120 | 800 |
| Comp. Example B25 | Rh-W-Ceria-Alumina | 100 | 150 | 0.008 | 0.33 | 15 | Ceria-Alumina | 120 | 800 |
| Comp. Example B26 | Rh-W-Ceria-Alumina | 100 | 150 | 0.008 | 0.33 | 60 | Ceria-Alumina | 120 | 500 |

EP 0 983 787 B1

## FIG.4

| | Composition | NOx Conversion Rate (%) | | |
|---|---|---|---|---|
| | | 300℃ | 350℃ | 400℃ |
| Examlpe B1 | Rh-W-Alumina | 25 | 21 | 19 |
| Examlpe B2 | Rh-W-Alumina | 35 | 30 | 29 |
| Examlpe B3 | Rh-W-Alumina | 43 | 35 | 33 |
| Examlpe B4 | Rh-W-Alumina-Silica | 26 | 24 | 18 |
| Examlpe B5 | Rh-W-Alumina-Silica | 36 | 29 | 28 |
| Examlpe B6 | Rh-W-Alumina-Silica | 44 | 35 | 32 |
| Examlpe B7 | Rh-W-Titania-Silica | 27 | 22 | 20 |
| Examlpe B8 | Rh-W-Titania-Silica | 37 | 31 | 30 |
| Examlpe B9 | Rh-W-Titania-Silica | 45 | 37 | 34 |
| Examlpe B10 | Rh-W-Magnesia-Alumina | 28 | 23 | 21 |
| Examlpe B11 | Rh-W-Magnesia-Alumina | 38 | 32 | 31 |
| Examlpe B12 | Rh-W-Magnesia-Alumina | 46 | 38 | 35 |
| Examlpe B13 | Rh-W-Ceria-Alumina | 28 | 24 | 22 |
| Examlpe B14 | Rh-W-Ceria-Alumina | 38 | 34 | 32 |
| Examlpe B15 | Rh-W-Ceria-Alumina | 46 | 39 | 36 |
| Examlpe B16 | Rh-W-MFI Zeolite | 29 | 26 | 23 |
| Examlpe B17 | Rh-W-MFI Zeolite | 39 | 35 | 33 |
| Examlpe B18 | Rh-W-MFI Zeolite | 47 | 40 | 37 |
| Examlpe B19 | Rh-W-MOR Zeolite | 29 | 27 | 24 |
| Examlpe B20 | Rh-W-MOR Zeolite | 39 | 36 | 34 |
| Examlpe B21 | Rh-W-MOR Zeolite | 47 | 41 | 36 |
| Examlpe B22 | Rh-W-Y Zeolite | 30 | 28 | 25 |
| Examlpe B23 | Rh-W-Y Zeolite | 40 | 38 | 35 |
| Examlpe B24 | Rh-W-Y Zeolite | 48 | 42 | 39 |
| Examlpe B25 | Rh-W-$\beta$ Zeolite | 31 | 28 | 26 |
| Examlpe B26 | Rh-W-$\beta$ Zeolite | 41 | 37 | 36 |
| Examlpe B27 | Rh-W-$\beta$ Zeolite | 49 | 42 | 40 |
| Comp. Example B1 | Rh-W-Alumina | 20 | 17 | 14 |
| Comp. Example B2 | Rh-W-Alumina | 6 | 12 | 12 |
| Comp. Example B3 | Rh-W-Alumina | 15 | 14 | 14 |
| Comp. Example B4 | Rh-W-Alumina | 19 | 15 | 14 |
| Comp. Example B5 | Rh-W-Alumina | 2 | 5 | 4 |
| Comp. Example B6 | Rh-W-Magnesia | 21 | 18 | 15 |
| Comp. Example B7 | Rh-W-Alumina-Silica | 7 | 13 | 13 |
| Comp. Example B8 | Rh-W-Alumina-Silica | 16 | 15 | 15 |
| Comp. Example B9 | Rh-W-Alumina-Silica | 20 | 16 | 15 |
| Comp. Example B10 | Rh-W-Alumina-Silica | 3 | 6 | 5 |
| Comp. Example B11 | Rh-W-Alumina-Silica | 22 | 19 | 16 |
| Comp. Example B12 | Rh-W-Titania-Silica | 7 | 14 | 14 |
| Comp. Example B13 | Rh-W-Titania-Silica | 17 | 16 | 16 |
| Comp. Example B14 | Rh-W-Titania-Silica | 21 | 17 | 16 |
| Comp. Example B15 | Rh-W-Titania-Silica | 4 | 7 | 6 |
| Comp. Example B16 | Rh-W-Titania-Silica | 23 | 20 | 16 |
| Comp. Example B17 | Rh-W-Magnesia-Alumina | 9 | 15 | 4 |
| Comp. Example B18 | Rh-W-Magnesia-Alumina | 18 | 15 | 16 |
| Comp. Example B19 | Rh-W-Magnesia-Alumina | 22 | 17 | 16 |
| Comp. Example B20 | Rh-W-Magnesia-Alumina | 5 | 7 | 6 |
| Comp. Example B21 | Rh-W-Magnesia-Alumina | 24 | 20 | 16 |
| Comp. Example B22 | Rh-W-Ceria-Alumina | 10 | 15 | 14 |
| Comp. Example B23 | Rh-W-Ceria-Alumina | 19 | 17 | 16 |
| Comp. Example B24 | Rh-W-Ceria-Alumina | 23 | 18 | 16 |
| Comp. Example B25 | Rh-W-Ceria-Alumina | 5 | 8 | 6 |
| Comp. Example B26 | Rh-W-Ceria-Alumina | 13 | 20 | 12 |